# EUROPEAN PATENT SPECIFICATION

(11) **EP 0 587 027 B1**
(45) Date of publication and mention of the grant of the patent: **03.07.1996**
(21) Application number: 93113936.4
(22) Date of filing: 01.09.1993
(51) Int. Cl.: B29C 45/17, B29C 45/26

(54) **Drive apparatus for driving movable member in plastic molding die apparatus**
Antriebsvorrichtung zum Antrieb eines beweglichen Teiles in einer Formvorrichtung für Kunststoff
Dispositif d'entraînement pour entraîner une partie mobile dans un moule pour matière plastique

(30) Priority: 09.09.1992 JP 266583/92
(43) Date of publication of application: 16.03.1994
(73) Proprietor: MITSUBISHI GAS CHEMICAL COMPANY, INC., Tokyo, 100 (JP); PLASTRON CORPORATION, Adachi-gun, Fukushima-ken (JP)
(72) Inventor: Kaneishi, Akimasa, Hiratsuka-shi, Kanagawa-ken (JP); Hozumi, Tetsuya, Nihonmatsu-shi, Fukushima-ken (JP)
(74) Representative: Zenz, Joachim Klaus, Dipl.-Ing.

(56) References cited:
- EP-A- 0 283 207
- EP-A- 0 382 888
- EP-A- 0 385 175
- DE-A- 3 009 431

## Description

### Field of the Invention

The present invention relates to a drive apparatus for driving a movable member in a plastic molding die apparatus according to the preamble of patent claim 1

### Description of the Prior Art

A conventional gas injection molding method uses a gas injection nozzle for introducing gas into resin enclosed in a cavity space in dies.

An injection molding apparatus disclosed in Japanese Patent Appln. Laid-Open No. 64-14012 has an arrangement that a gas injection nozzle can be reciprocated.

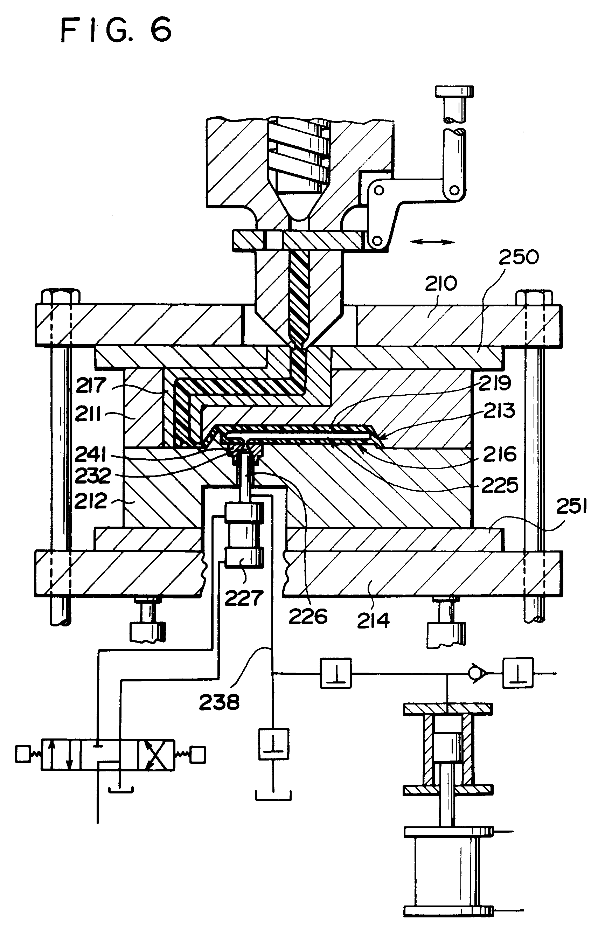

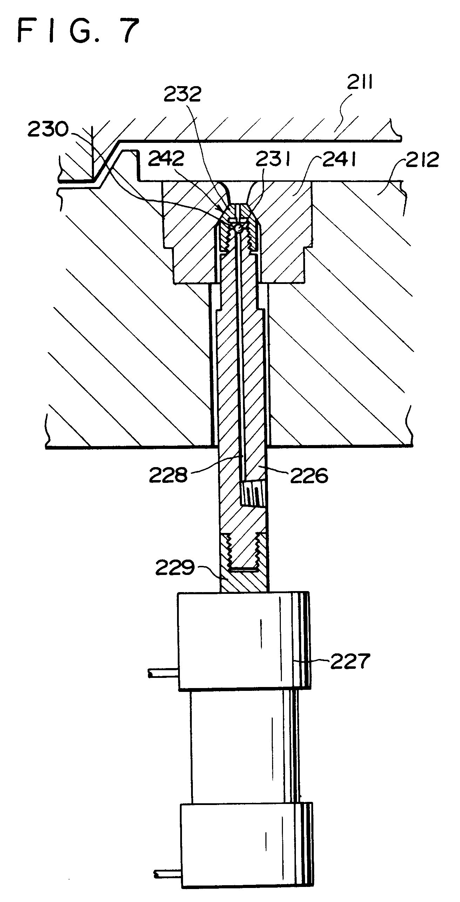

Fig. 6 is a cross sectional view which illustrates the foregoing injection molding apparatus. Fig. 7 is an enlarged cross sectional view which illustrates the gas injection nozzle of the foregoing conven,tional structure.

Referring to Figs. 6 and 7, reference numerals 210 and 214 respectively represent upper and lower platens, and 211 and 212 represent upper and lower dies. Reference numerals 213 and 216 represent surfaces of the upper and the lower dies 211 and 212. Reference numeral 219 represents resin injected into the cavity, and 225 represents a space formed in a molded product after the gas has been injected.

The foregoing apparatus is structured such that a single-shaft fluid cylinder 227 disposed adjacent to a lower die 212 is used to move a gas injection nozzle 226 having a center hole 228 therein. As shown in Fig. 7, the gas injection nozzle 226 has a cap portion 232 at the leading portion thereof and a ball 231 is inserted into it so that a check valve 230 is constituted. Further, the structure is so arranged that the gas injection nozzle 226 is directly connected to a piston 229 of the fluid cylinder 227. The fluid cylinder 227 is secured to the lower die 212. Therefore, if the cap portion 232 of the gas injection nozzle 226 must be inspected for maintenance for example, the fluid cylinder 227 must be removed. Since a gas supply pipe 238 is disposed outside the fluid cylinder 227 as shown in Fig. 6, a space for piping and wiring must be created by cutting the die 212.

If the fluid cylinder 227 is fastened adjacent to the lower die 212 as described above, a die fastening plate 251, an ejector plate and an ejector pin (omitted from illustration) must be decomposed to attach/detach the gas injection nozzle 226. Therefore, decomposition and reassembling take an excessively long time and a large labor.

Since the fluid cylinder 227 adjacent to the lower die 212 is disposed at an intermediate position between the die ejector and the product cavity, the ejector pins required to eject a molded product cannot easily be disposed and designed in an area in which the fluid cylinder is disposed.

A drive apparatus for driving a movable valve in a valve gated injection molding system is disclosed in EP-A-0 382 888 and EP-A-0 385 175. Both prior art systems provide connections between the valve and a yoke as well as between said yoke and a pair of hydraulically actuated pistons. The pistons are activated in unison according to a predetermined cycle in order to move the valve in the desired position. The injection molding system described in the EP-A-0 385 175 is particularly adapted to the production of hollow products.

### SUMMARY OF THE INVENTION

The object of the present invention is to provide for a drive apparatus which is insensitive to slight operation errors between the fluid cylinders. This object is solved by the features of patent claim 1.

In a preferred embodiment the molding die apparatus is arranged such that resin is supplied into a cavity formed in a first die end a second die, and the drive apparatus provided for either of the dies is used to drive the movable shaft having a nozzle of gas supply means so that gas is supplied into the resin in the cavity and, accordingly, a hollow product is molded,
the drive apparatus for driving the movable shaft comprising:
said plurality of fluid cylinders which are disposed at fixed positions adjacent to the first or second die with respect to the movable shaft and which are substantially the same.

The plurality of cylinders of the drive apparatus are fastened to a die fastening plate adjacent to the first or second die, and the movable shaft and the gas injection nozzle can be attached/detached together with the connection plate to and from the die fastening plate while eliminating a necessity of decomposing the molding die apparatus.

The movable shaft is formed into a hollow structure so that pipes and wires can be secured thereto.

Other and further objects, features and advantages of the invention will be appear more fully from the following description.

### BRIEF DESCRIPTION OF THE DRAWINGS

Fig. 1 is an arbitrary cross sectional view which illustrates an embodiment of a plastic molding die apparatus using a drive apparatus according to the present invention;
Fig. 2 is a schematic view which illustrates a state of the plastic molding die apparatus according to the present invention from which a connection plate and a movable shaft for supporting a gas injection nozzle are removed;
Fig. 3 is a plan view which illustrates a cylinder housing portion which is a drive portion of the plastic molding die apparatus according to the present invention;
Fig. 4 is a cross sectional view which illustrates the cylinder housing portion;
Fig. 5 is an enlarged cross sectional view which illustrates a connection portion in which a rod of a fluid cylinder and the connection plate are connected to each other;
Fig. 6 is a cross sectional view which illustrates a conventional example of a plastic molding die apparatus for use in a gas injection method; and
Fig. 7 is an enlarged cross sectional view which illustrates a gas injection nozzle of the conventional example.

### DESCRIPTION OF THE PREFERRED EMBODIMENTS

A drive apparatus for driving a movable member in a plastic molding die apparatus according to the present invention will now be described in further detail with reference to the drawings which illustrate an embodiment.

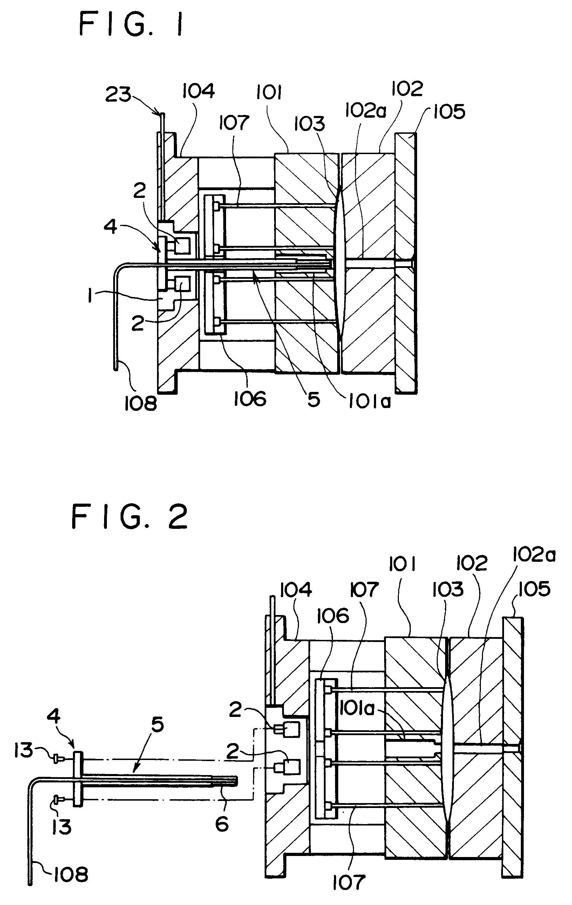

Fig. 1 is a schematic cross sectional view which illustrates a plastic molding die apparatus using the drive apparatus according to the present invention. Fig. 2 is a schematic cross sectional view which illustrates a state where a movable shaft for supporting a gas injection nozzle is removed from the plastic molding die apparatus.

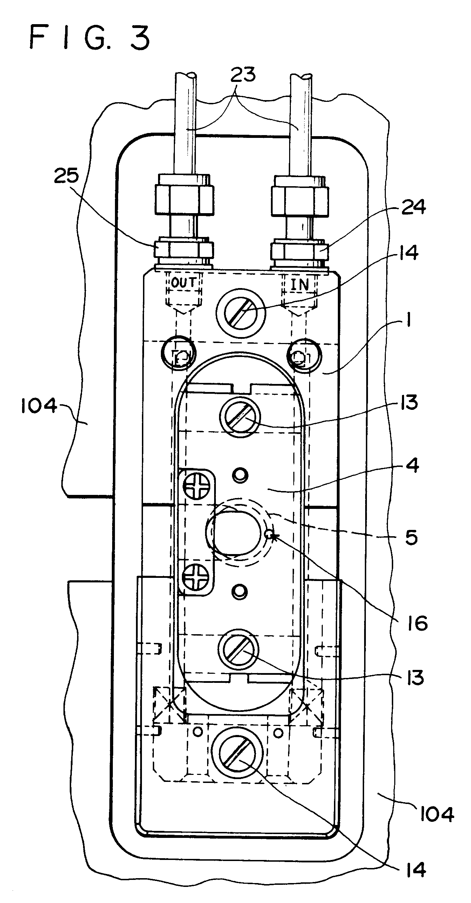

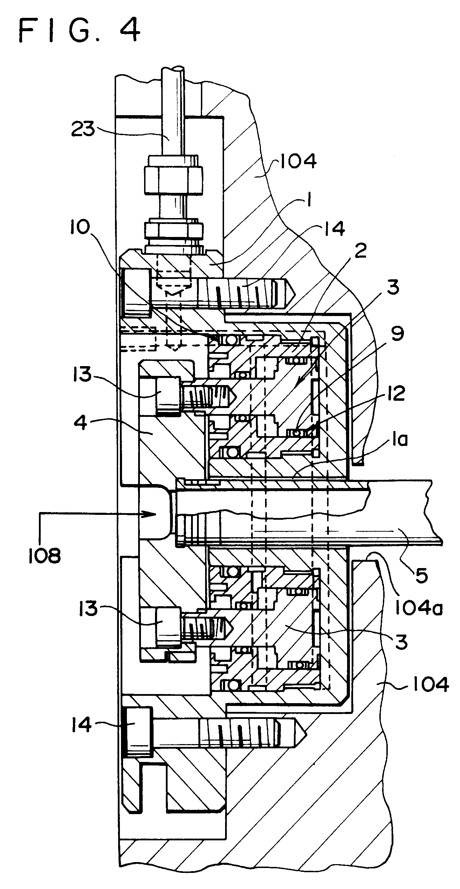

Fig. 3 is a side elevational view which illustrates a connection plate for establishing the connection between the movable shaft and cylinders and illustrates a die fastening plate. Fig. 4 is a cross sectional view which illustrates the connection plate and the die fastening plate.

As shown in Figs. 1 and 2, the plastic molding die apparatus using the drive apparatus according to the present invention comprises a die fastening plate 104, an ejector plate 106 for supporting a plurality of ejector pins, a first die 101, a second die 102 and a die fastening plate 105 disposed in this sequential order when viewed from a left position.

Resin for molding is, through the second die 102, injected into a cavity 103 formed by the first and the second dies 101 and 102, while gas for forming a hollow portion is injected through the gas injection nozzle 6.

As shown in Figs. 3 and 4, a cylinder housing 1 is secured to the die fastening plate 104 while being tightened by screws 14. A through hole 1a is formed at the central portion of the cylinder housing 1, the cylinder housing 1 having two holes formed symmetrically to each other with respect to the center axis of the hole 1a. Hydraulic cylinder bodies 2 and 2 are embedded in the foregoing two holes. The hydraulic cylinder bodies 2 include corresponding pistons 3 sliding therein so that hydraulic actuators are formed.

The pistons 3 of the two fluid cylinders have rods connected to the connection plate 4 which establishes the connection to the movable shaft 5. That is, the leading portions of the pistons 3 are introduced into the connection plate 4 and tightened by screws 13.

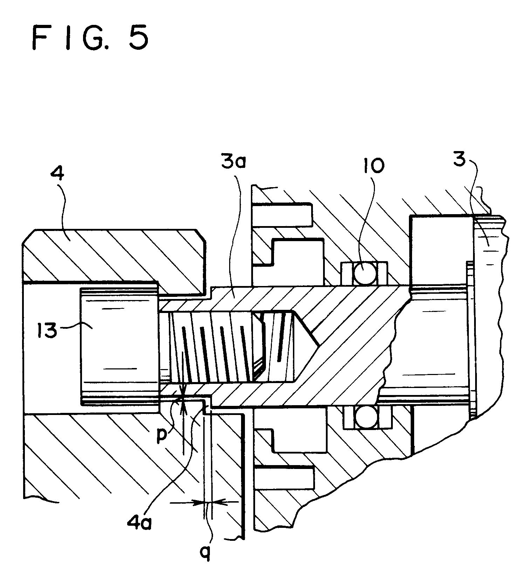

Fig. 5 is an enlarged view which illustrates the connection portion in which the connection between the connection plate 4 and a rod 3a of the piston 3 is established. Fig. 5 illustrates a state where the piston rod 3a is moved to the rightmost side in the figure, wherein axial-directional clearance q is created between the portion 4a of the connection plate 4 and the shoulder of the piston rod 3a and clearance p is created in the radial direction.

"O" rings 9 and 10 are disposed between the hydraulic cylinder bodies 2 and the pistons 3. The connection plate 4 has a female-thread hole at the central portion thereof, the pipe-like movable shaft 5 being screwed and fixed to the female thread hole. The movable shaft 5 is allowed to pass through the through hole formed in the cylinder housing 1 and a central hole 101a formed in the first die 101 so that the leading portion (a nozzle 6) of the movable shaft 5 is introduced into the cavity 103. The central portion of the movable shaft 5 is allowed to pass through the central portion of each of the through hole 1a (see Fig. 4) formed in the cylinder housing 1, a through hole 104a formed in the die fastening plate 104 which supports the cylinder housing, a hole formed in the ejector plate 106 and the central hole 101a formed in the first die 101. The outer diameter of the movable shaft 5 is made to be sufficiently smaller than the inner diameter of each of the foregoing through holes so that proper clearances are created to prevent unnecessary friction. The hollow structure formed in the movable shaft 5 includes a high-pressure gas introduction pipe 108 and required wires secured therein. Further, the leading portion of the pipe for introducing the high pressure gas is connected to the nozzle 6. It should be noted that the present invention may be arranged such that the portion including the nozzle 6 is formed into the valve structure which is similar to that of the foregoing conventional apparatus.

The two cylinder pistons 3 are simultaneously operated by one fluid control means.

Fluid pipes 23 forming a portion of the fluid control means are allowed to pass through fluid passages 23 connected to the fluid cylinder via an in-port 24 and an out-port 25 formed in the cylinder housing 1 so that the fluid pipes 23 are connected to a fluid pressure source (omitted from illustration).

When the two cylinder pistons 3 have been moved to left in the figure by operating the fluid pressure source, the connection plate 4 and the movable shaft 5 are integrally moved. As a result, the nozzle 6 is moved in a direction away from the cavity 103. When the cylinder pistons 3 are moved to right in the figure, the nozzle 6 is moved in a direction in which the nozzle 6 is brought into contact and connected to the cavity 103.

As described above, an end portion of the movable shaft 5 is, by the thread means, received within the central hole formed in the connection plate 4 and fixed by a set screw 16. By removing the connection plate 4 from the two cylinder pistons 3 by loosening the screws 13 as shown in Fig. 2, the integrated body composed of the connection plate 4 and the movable shaft 5 can be disconnected.

The ejector plate 106 has four ejector pins 107. The ejector pins 107 are disposed to correspond to the holes formed in the first die 101, the leading portions of the ejector pins being allowed to face the cavity 103.

As described above, the plastic molding die apparatus using the drive apparatus according to the present invention is so structured that cylinders are disposed around a movable shaft and connected by the connection member. Therefore, the movable shaft is moved when the pistons are moved.

Therefore, the configuration can be made rational and, accordingly, the overall size of the apparatus can be reduced. The apparatus according to the present invention has the arrangement that the connection portions, in which the rods of the fluid cylinders and the connection plate are connected to each other, have predetermined plays in the axial and radial directions of the rods of the fluid cylinders.

Therefore, even if a slight operation error occurs between the fluid cylinders, generation of unnecessary restriction in the connection portion, in which the pistons and the connection member are connected to each other, is prevented. As a result, a smooth operation can be performed while eliminating a necessity of using a cylinder synchronizing apparatus and precise guide members.

If a plurality of cylinders are used, a complicated synchronizing apparatus and the like must be used. However, the foregoing structure according to the present invention is able to eliminate the necessity of using the foregoing apparatus.

The foregoing structure according to this embodiment, the movable shaft can be removed by taking off the two bolts so that the necessity of decomposing the die can be eliminated. As a result, the gas injection pipe and the gas injection nozzle and the like can easily be fastened/removed.

Since the size of the movable shaft 5 is made to be sufficiently small as compared with the size of the cylinder housing, the ejector pins can be disposed more densely as compared with the conventional method.

If the output force from the cylinder is required to be enlarged, three or more cylinders may be disposed while disposing the cylinders at the apexes of an equilateral triangle, a square or a regular polygon, the center of each of which is the movable shaft 5.

Although the description has been made about the drive apparatus for use in the molding die apparatus adapted to the gas injection molding method, the apparatus according to the present invention may be widely used, for example, widely used to control the core in a cavity by means of a shaft relating to the cavity.

Although the foregoing embodiment has the arrangement that the drive apparatus is fastened to the die fastening plate, the position to which the drive apparatus is fastened is not limited to the die fastening plate. The drive apparatus may be disposed at an arbitrary position in the die.

Although the invention has been described in its preferred form with a certain degree of particularity, it is understood that the present disclosure of the preferred form has been changed in the details of construction and the combination and arrangement of parts may be resorted without departing from the scope of the invention as hereinafter claimed.

## Claims

1. A drive apparatus for driving a movable member in a plastic molding die apparatus comprising:
a movable member having a movable shaft (5) which moves in said die apparatus;
a plurality of fluid cylinders (2) which are disposed in said plastic molding die apparatus while being disposed symmetrically whith respect to a movement axis of said movable shaft (5) and which are made to be substantially the same;
a connection plate (4) for establishing the connections among rods (3a) of said plurality of fluid cylinders and said movable shaft; and
fluid control means (23) for driving said plurality of cylinders,
characterized in that
a connection portion, in which said rods (3a) of said fluid cylinders (2) and said connection plate (4) are connected, has predetermined plays (q, p) in an axial direction and a radial direction, said predetermined plays (q, p) serving the purpose of compensating for slight actuation cylinder operation errors.

2. A drive apparatus according to claim 1, wherein
said molding die apparatus being arranged such that resin is supplied into a cavity (103) formed in a first die (101) and a second die (102), and said drive apparatus provided for either of said dies is used to drive said movable shaft (5) having a nozzle (6) of gas supply means so that gas is supplied into said resin in said cavity (103) and, accordingly, a hollow product is molded,
said drive apparatus for driving said movable shaft (5) comprising:
said plurality of fluid cylinders (2) which are disposed at fixed positions adjacent to said first or second die (101, 102) with respect to said movable shaft (5) and which are substantially the same.

3. A drive apparatus for driving a movable member in a plastic molding die apparatus according to claim 2, wherein said plurality of cylinders (2) of said drive apparatus are fastened to a die fasterning plate (104) adjacent to said first (101) or second (102) die, and
said movable shaft (5) and said gas injection nozzle (6) can be attached/detached together with said connection plate (4) to and from said die fastening plate (104) while eliminating a necessity of decomposing said molding die apparatus.

4. A drive apparatus for driving a movable shaft in a plastic molding die apparatus according to claim 2 or 3, wherein said movable shaft (5) is formed into a hollow structure including pipes and wires secured thereto.

## Patentansprüche

1. Antriebsvorrichtung zum Antreiben eines beweglichen Teils in einer Formvorrichtung für Kunststoff, enthaltend:
ein bewegliches Teil mit einem beweglichen Schaft (5), der sich in der Formvorrichtung bewegt;
mehrere Fluidzylinder (2), die mit Bezug auf eine Bewegungsachse des beweglichen Schaftes (5) symmetrisch in der Kunststoff-Formvorrichtung angeordnet sind und im wesentlichen identisch ausgebildet sind;
eine Verbindungsplatte (4) zum Herstellen der Verbindung zwischen Stangen (3a) der genannten mehreren Fluidzylinder und dem beweglichen Schaft; und
Fluidsteuermittel (23) zum Antreiben der genannten mehreren Zylinder,
**dadurch gekennzeichnet,**
daß ein Verbindungsabschnitt, in dem die Stangen (3a) des Fluidzylinders (2) mit der Verbindungsplatte (4) verbunden sind, ein vorgegebenes Spiel (q, p) in axialer und radialer Richtung hat, wobei das vorgegebene Spiel (q, p) den Zweck hat, kleinere betriebliche Zylinderbetätigungsfehler zu kompensieren.

2. Antriebsvorrichtung nach Anspruch 1, wobei die Formvorrichtung so angeordnet ist, daß Harz einem in einer ersten Form (101) und einer zweiten Form (102) gebildeten Hohlraum (103) zugeführt wird, und wobei die für eine der Formen vorgesehenen Antriebsvorrichtung, als Antrieb für den beweglichen Schaft (5) verwendet wird, der eine Düse (6) für Gaszuführungszwecke hat, so daß Gas in das in dem Hohlraum (103) befindliche Harz eingeführt und folglich ein hohles Produkt geformt wird,
wobei die Antriebsvorrichtung zum Antreiben des beweglichen Schaftes (5) aufweist:
die genannten mehreren Fluidzylinder (2) die an festen Positionen zu der ersten und zweiten Form (101, 102) bezogen auf den beweglichen Schaft (5) angeordnet sind, und die im wesentlichen identisch ausgebildet sind.

3. Antriebsvorrichtung zum Antreiben eines beweglichen Teils in einer Formvorrichtung für Kunststoff nach Anspruch 2, wobei die genannten mehreren Zylinder (2) der Antriebsvorrichtung an einer Formbefestigungsplatte (104) benachbart zu der ersten (101) und zweiten (102) Gesenkform befestigt sind, und
der bewegliche Schaft (5) und die Gaszuführungsdüse (6) gemeinsam mit der Verbindungsplatte (4) an der Befestigungsplatte (104) befestigt oder von dieser gelöst werden können, wodurch eine Demontage der Formvorrichtung überflüssig wird.

4. Antriebsvorrichtung zum Antreiben eines beweglichen Schaftes in einer Kunststoff-Formvorrichtung nach Anspruch 2 oder 3, wobei der bewegliche Schaft (5) in Form einer hohlen Struktur mit darin befestigten Rohren und Drähten ausgebildet ist.

## Revendications

1. Appareil de commande d'un élément mobile dans un appareil de moulage de matières plastiques, comprenant :
un élément mobile ayant une tige mobile (5) qui se déplace dans l'appareil de moulage,
plusieurs vérins à fluide (2) placés dans l'appareil de moulage symétriquement par rapport à un axe de mouvement de la tige mobile (5) et sensiblement identiques,
une plaque de liaison (4) établissant les liaisons entre les tiges (3a) des vérins et la tige mobile, et
un moyen de distribution de fluide (23) commandant les vérins,
caractérisé par le fait qu'une partie de liaison, dans laquelle les tiges (3a) des vérins à fluide (2) et la plaque de liaison (4) sont reliées, a des jeux déterminés (q, p) dans la direction axiale et dans la direction radiale qui servent à compenser les légères erreurs de fonctionnement des vérins d'actionnement.

2. Appareil de commande selon la revendication 1, avec lequel l'appareil de moulage est agencé de façon que de la résine soit envoyée dans une cavité (103) ménagée dans une première partie de moule (101) et une deuxième partie de moule (102), cet appareil de commande prévu pour l'une ou l'autre des parties de moule étant utilisé pour la commande de la tige mobile (5) munie d'une buse (6) de moyen d'alimentation en gaz, de façon que du gaz soit envoyé dans la résine se trouvant dans la cavité (103) et que par conséquent soit moulé un produit creux,
cet appareil de commande de la tige mobile (5) comprenant lesdits vérins à fluide (2), qui sont placés à des endroits fixes près de la première ou de la deuxième partie de moule (101, 102) par rapport à la tige mobile (5) et sont sensiblement identiques.

3. Appareil de commande d'un élément mobile dans un appareil de moulage de matières plastiques selon la revendication 2, dans lequel les vérins (2) de cet appareil de commande sont fixés à une plaque de fixation de partie de moule (104) près de la première partie de moule (101) ou de la deuxième partie de moule (102), et
la tige mobile (5) et la buse d'injection de gaz (6) peuvent être attachées/détachées conjointement avec la plaque de liaison (4) à/de la plaque de fixation de partie de moule (104) avec élimination de la nécessité de dissocier l'appareil de moulage.

4. Appareil de commande d'une tige mobile dans un appareil de moulage de matières plastiques selon l'une des revendications 2 et 3, dans lequel la tige mobile (5) est formée dans une structure creuse comprenant des tuyaux et des fils qui y sont fixés.
